# EUROPÄISCHE PATENTSCHRIFT

(11) **EP 1 389 268 B1**
(45) Veröffentlichungstag und Bekanntmachung des Hinweises auf die Patenterteilung: **26.07.2006**
(21) Anmeldenummer: 02743045.3
(22) Anmeldetag: 17.05.2002
(51) Int. Cl.: F01N 11/00, G01N 25/30, G01N 27/16, B01D 53/30

(54) **SENSOR UND VERFAHREN ZUR ÜBERWACHUNG UND STEUERUNG VON KATALYSATOREN, INSBESONDERE VON KRAFTFAHRZEUGKATALYSATOREN**
SENSOR AND METHOD FOR MONITORING AND CONTROLLING CATALYSTS, ESPECIALLY MOTOR VEHICLE CATALYSTS
DETECTEUR ET PROCEDE DE SURVEILLANCE ET DE COMMANDE DE CATALYSEURS, NOTAMMENT DE CATALYSEURS DE VEHICULES AUTOMOBILES

(30) Priorität: 19.05.2001 DE 10124550
(43) Veröffentlichungstag der Anmeldung: 18.02.2004
(73) Patentinhaber: DaimlerChrysler AG, 70567 Stuttgart (DE)
(72) Erfinder: BIRKHOFER, Thomas, 88090 Immenstaad (DE); MATT, Martin, 76646 Bruchsal-Untergrombach (DE); MOOS, Ralf, 95447 Bayreuth (DE); PLOG, Carsten, 88677 Markdorf (DE); RIED, Thomas, 73066 Uhingen (DE)
(86) Internationale Anmeldenummer: PCT/EP2002/005452
(87) Internationale Veröffentlichungsnummer: WO 2002/095199

(56) Entgegenhaltungen:
- EP-A- 0 589 169
- DE-A- 2 643 739
- DE-A- 4 020 383
- DE-A- 19 542 038
- DE-A- 19 745 039
- US-A- 5 708 585
- US-A- 6 009 742

## Beschreibung

Die Erfindung betrifft einen Sensor zur Überwachung und/oder Steuerung eines Katalysators gemäß dem Oberbegriff des Anspruchs 1 und ein Verfahren mit den Merkmalen den Oberbegriffs des Anspruchs. 7.

Die Hauptemittenten von Stickoxiden (NOx) in den Industriestaaten sind Verkehr, fossil befeuerte Kraftwerke und Industrieanlagen. Während die Kraftwerks- und Industrieemissionen immer weiter zurückgehen, tritt der Anteil des Automobils immer mehr in den Vordergrund. Immer schärfere Abgasgesetze verbunden mit dem Druck zur Reduzierung des Kraftstoffverbrauches erfordern daher neue Konzepte sowohl für den Verbrennungsmotor als auch für die Abgasreinigung. Dies bedingt auch neue Konzepte für die Überwachung von Abgasreinigungsanlagen.

In der deutschen Offenlegungsschrift DE 26 43 739 A1 ist ein Verfahren zur Oberwachung der Aktivität von Katalysatoren für die Abgasreinigung beschrieben. Bei dem Verfahren werden zwei Temperaturfühler dicht beieinander in einem Abgassystem angeordnet. Einer der Temperaturfühler kann eine katalytische Beschichtung aufweisen. Durch Vergleich der Temparatursignale der Temperaturfühler kann auf die katalytische Aktivität des im Abgassystem angeordneten Katalysators geschlossen werden.

Im Zusammenhang mit Katalysatoren, die in Abgasreinigungsanlagen eingesetzt werden, treten insbesondere die nachfolgend beschriebenen Probleme auf.

Beim stöchiometrisch betriebenen Ottomotor (sog. "λ=1-Motor"). wird das Luft/Kraftstoffverhältnis λ des Rohabgases mit Hilfe einer ersten λ-Sonde detektiert. Je nach Regelabweichung vom Idealzustand λ=1 wird dann das Luft/Kraftstoffverhältnis etwas nachgeregelt. In der Praxis erhält man so eine λ-Schwingung des Rohabgases um den stöchiometrischen Punkt (λ=1). Im zeitlichen Mittel muß aber λ=1 eingehalten werden. Die Schwingungsfrequenz liegt im Bereich einiger zehntel Sekunden bis einiger Sekunden. Aufgrund der Sauerstoffspeicherfähigkeit des nach der ersten λ-Sonde angeordneten sog. "Drei-Wege-Katalysators" findet immer eine optimale Konversion statt, solange der Katalysator noch in gutem Zustand ist. Mit abnehmender Katalysatorgüte verringert sich die Konversionsrate und die Anspringtemperatur steigt. Parallel dazu nimmt auch die Fähigkeit, Sauerstoff zu speichern, ab. Eine zweite, nach dem Katalysator angeordnete λ-Sonde wird dann die Regelschwingung detektieren können. Eine Katalysatorgtiteerkennung ist möglich, indem die Unterschiede der Signale zwischen der ersten und der zweiten λ-Sonde ausgewertet werden, wie z.B. in der DE 4112478 oder in der DE 4209136 beschrieben. Insbesondere bietet es sich an, das amplitudenverhältnis der beiden Sonden als Gütekriterium heranzuziehen. Bei diesem Verfahren handelt es sich jedoch um ein Verfahren, das bei neuartigen hocheffizienten Katalysatoren, wie sie z.B. für ULEV- oder SULEV-Anforderungen gebraucht werden, an seine' Grenzen stößt.

Beim mit Luftuberschuß betriebenen Verbrennungsmotor (z.B. sog. "Magermator" oder Dieselmotor) entstehen prinzipbedingt viele Stickoxide. Ein mögliches Abgasreinigungskonzept sieht daher vor, in den Abgasstrang eines Kraftfahrzeuges einen Katalysator einzubringen, der eine gewisse Zeit lang Stickoxide speichern kann. Nach dieser "Speicherphase", in welcher der Katalysator mit der zu speichernden Abgaskomponente "gefüllt" oder "beladen" wird, folgt eine Desorptionsphase, in welcher der Katalysator "geleert" (auch "regeneriert" genannt) wird. Bei den zur Zeit gängigen Konzepten zur Erkennung des Katalysatorfüllgrades und der daran anschließenden Regelung des Kraftstoff/Luft.-Verhältnisses werden Gassensoren verwendet. Das können heizbare Sauerstoffsensoren (HEGO) sein, wie z.B. in der DE 19744738 vorgeschlagen wird, oder eine Kombination aus NOx-Sensor und Sauerstoffsensor.

Sowohl für die Abgasnachbehandlungskonzepte des "Magermotors" als auch für die das "λ=1-Motors" ist der Einsatz von Temperaturfühlern (derzeit i.d.R. Thermoelemente) günstig.

Beim "λ=1-Motor" dienen diese vor allem der verbesserten Katalysatorgüteerkennung, der sog. Onboard-Diagnose (OBD). Aufgrund der Reaktionswärmeentwicklung, die natürlich bei einem gealterten Katalysator aufgrund dessen geringerer Umsätze geringer ist, kann durch die Verwendung eines Temperaturfühlers die Sicherheit der Katalysatorgüteerkennung deutlich gesteigert werden. Ein Beispiel dafür findet sich in der DE 4201136 und in der für die Beurteilung dieser Patentschrift in Betracht gezogenen Druckschriften.

Auch für die Regelung und OBD von "Magermotoren" ist der Einsatz eines Temperaturfühlers sinnvoll, wie in der Fachliteratur beschrieben ist.

Neben den klassischen Thermoelementen werden heutzutage im Abgasstrang eines Automobils auch temperaturabhängige elektrische Widerstände in planarer Ausführungsform, wie in der Fachliteratur beschrieben, eingesetzt.

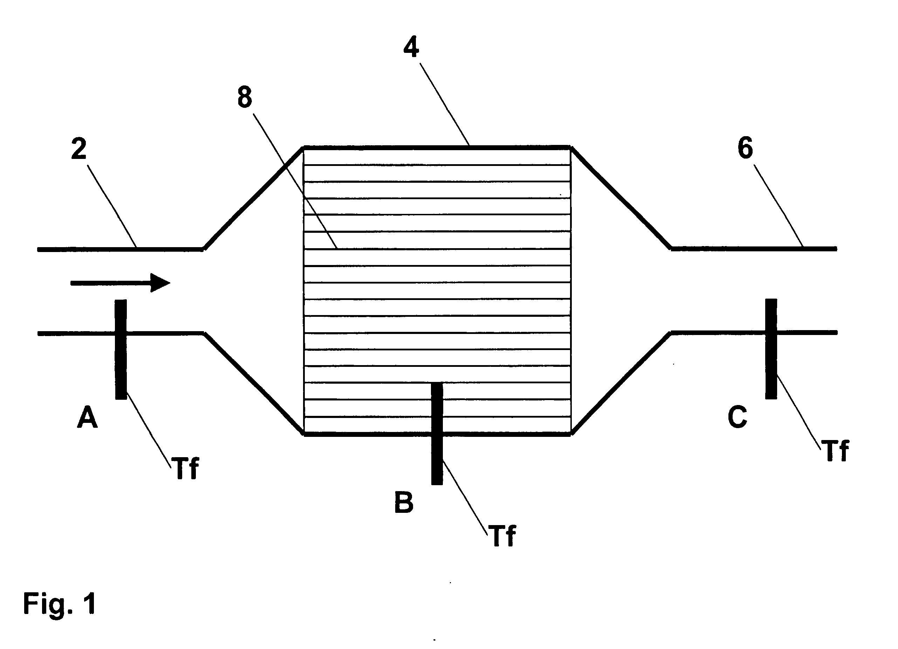

Alle diese Temperaturfühler werden als Stand der Technik wie in Fig. 1 beschrieben ins Abgas eingeführt. Dabei wird der Temperaturfühler Tf entweder in Position A, d.h. in die Abgasleitung vor Katalysator 2 eingebaut und vom Gasstrom vor Katalysator angeströmt. Oder der Temperaturfühler wird in Position C, d.h. in die Abgasleitung nach Katalysator 6 eingebaut und wird vom Gasstrom nach Katalysator angeströmt.

Oder der Temperaturfühler wird in Position B durch eine Bohrung im Katalysatorgehäuse 4 direkt in den Katalysatorkörper 8 eingeführt und wird vom Gas im Katalysator angeströmt.

Abhängig vom Einbauort mißt der Sensor die Temperatur des Gases an der Einbauposition. Um die Reaktionswärme zu bestimmen, würde es aber Sinn machen, daß der Temperaturfühler die Temperatur der katalytisch aktiven Schicht mißt. So mißt ein in Position C eingebauter Temperaturfühler lediglich den Teil der Temperaturerhöhung durch Reaktionswärme, der an die Gasphase übertragen wird.

Da alle nach dem Stand der Technik eingesetzten Temperaturfühler eine beachtliche Wärmekapazität besitzen, wohingegen das Gas eine sehr geringe Wärmekapazität aufweist, fallen die zu messenden Temperaturerhöhungen äußerst gering aus. Zudem sind solche Temperaturfühler sehr langsam, da erst der gesamte Temperaturfühler auf Gastemperatur gebracht werden muß.

Neuere Ansätze gehen daher in die Richtung, die thermische Masse des Temperaturfühlers zu reduzieren, indem z.B. dünnste Thermoelemente mit einem Durchmesser von nur 0,5mm eingesetzt werden. Leider sind solche Ausführungen nicht langzeitstabil. Der Nachteil, daß nur die Gastemperatur gemessen wird, bleibt bestehen.

Da solche Temperaturfühler einerseits nur die Gastemperatur messen und andererseits relativ träge sind, sind sie, wie die o.g. in der Literatur erwähnten Einsatzbeispiele zeigen, nur dann für die Katalysatorgüteerkennung einsetzbar, wenn man ein aufwendiges Modell zur Auswertung hinzufügt.

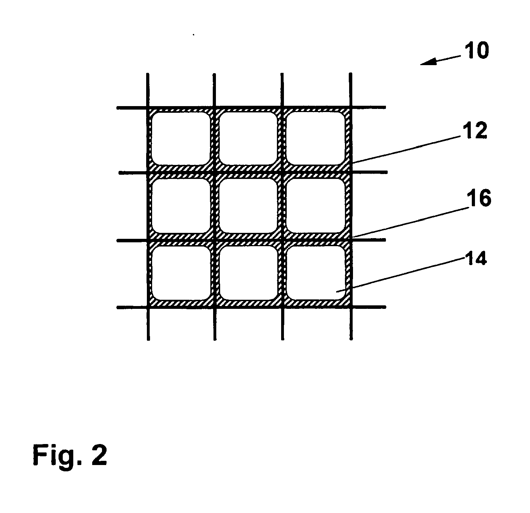

Ein typischer Katalysator ist wie in Fig. 2 beschrieben aufgebaut. Gezeigt ist schematisch ein Schnitt durch einen Katalysatormonolithen 10. Auf die Innenwände (sog. Stege) 16 des Katalysators 10 ist eine spezielle katalytisch aktive Beschichtung 12 aufgebracht, die die Funktion des Katalysators bestimmt. Es gibt aber auch sogenannte Vollkatalysatoren, bei denen die Stege aus katalytisch aktivem Material sind. Dann kann die katalytisch aktive Beschichtung entfallen.

Leider ist kein den Erfindern bekannter Stand der Technik in der Lage, genau oder wenigstens einigermaßen näherungsweise die Temperatur der auf den Monolithen aufgebrachten katalytisch aktiven Beschichtung zu messen.

All diese Nachteile werden durch einen Sensor gemäß Anspruch 1 überwunden. Insbesondere ist es erstmals möglich, die Schichttemperatur zu messen und schnelle Signaländerungen zu erhalten, die sogar ein thermales Katalysatorzustandsmanagement ermöglichen, insbesondere in einer besonderen Ausführungsform dieser Erfindung.

Der Grundgedanke der Erfindung ist es, einen Temperaturfühler direkt mit einer katalytisch aktiven Beschichtung zu versehen.

In einer besonderen Ausführung weist diese katalytisch aktive Beschichtung die gleichen oder ähnliche physikalische Eigenschaften wie ein ebenfalls im Abgasstrang vorhandener Katalysator auf.

In einer weiteren speziellen Ausführung sind die Beschichtung des Temperaturfühlers und die katalytisch aktive Beschichtung oder der katalytisch aktive Werkstoff des Katalysators identisch.

In einer weiteren besonderen Ausführung besteht diese katalytisch aktive Beschichtung wenigstens teilweise aus dem Material des Katalysators, falls dieser als Vollkatalysator ausgeführt ist.

In einer weiteren Ausführung der Erfindung wird die Temperatur der Beschichtung des Katalysators oder die Temperatur des Katalysators direkt dadurch gemessen, daß ein solcher Temperaturfühler in den Katalysator integriert wird.

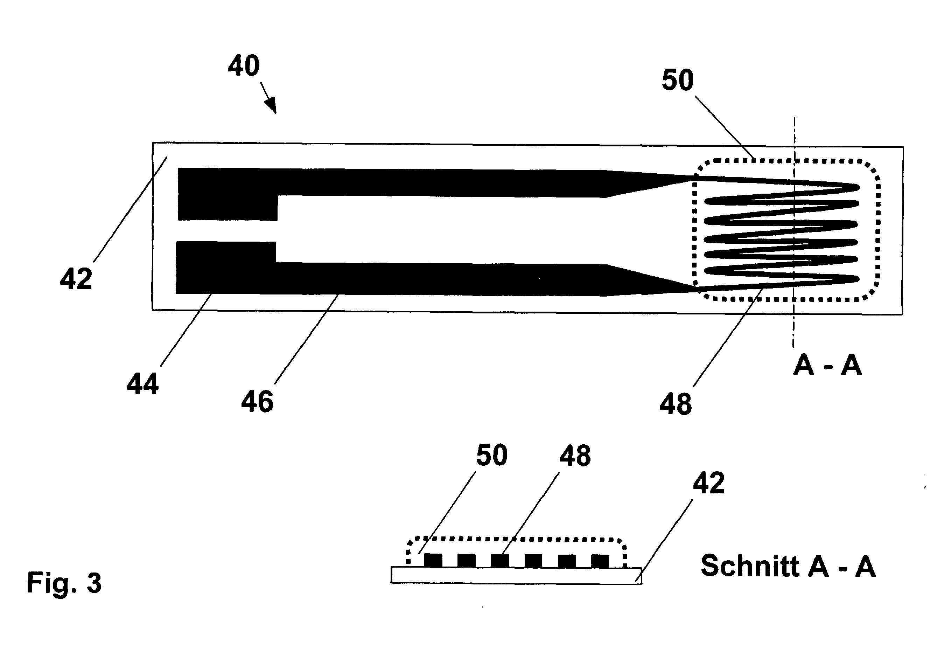

Fig. 3 zeigt eine typische Ausführungsform eines solchen beschichteten Temperaturfühlers 40. Auf ein Substrat 42 sind auf einer Seite, der sogenannten "Anschlußseite", elektrische Kontaktpads 44 aufgebracht. Zur Widerstandsmeßstruktur 48 auf der anderen Seite, der sogenannten "Sensorseite", des Temperaturfühlers 40 führen die Zuleitungen 46. Kontaktpads 44, Zuleitungen 46 und Widerstandsmeßstruktur 48 können z.B. in Dickschichttechnik aufgebracht werden. Ein typisches Material dafür ist Platin. Aber auch Kombinationen, z.B. Platin als Werkstoff für die Widerstandsmeßstruktur 48 und für die Zuleitungen 46 und Gold oder andere einfach zu kontaktierenden Werkstoffe für die Kontaktpads 44, sind denkbar. Geeignete Substrate sind z.B. aus handelsüblichem Al203 (z.B. Rubalit 708S, CeramTec). Poröse A1203-Substrate besitzen eine geringere Wärmeleitfähigkeit, was zu einer geringeren Wärmeabfuhr und damit zu einer größeren und schnelleren Signaländerung führt. Prinzipiell eigenen sich alle elektrisch isolierenden temperaturstabilen Werkstoffe als Substratwerkstoff.

Anstatt in Dickschichttechnik kann der Temperaturfühler 40 auch in Dünnschichttechnik z.B. aus Platin hergestellt werden.

Die Widerstandsmeßstruktur 48 ist mit der katalytisch aktiven Beschichtung 50 beschichtet. Die Beschichtung kann einseitig oder auch zweiseitig ausgeführt sein. Eine einfache Möglichkeit, die katalytisch aktive Beschichtung aufzubringen, kann ein Tauchverfahren mit anschließendem Brennprozeß sein. Da der beschichtete Temperaturfühler zusammen mit einem Abgaskatalysator im Abgasstrang plaziert wird, bietet es sich an, den Temperaturfühler mit exakt der selben Lösung zu beschichten wie den Katalysator.

In einer speziellen Ausführung ist die Schichtdicke der katalytisch aktiven Beschichtung des Temperaturfühlers genauso groß wie die Schichtdicke der katalytisch aktiven Beschichtung des Katalysators. Beide aktiven Beschichtungen sollten eine möglichst gleiche Morphologie aufweisen.

Anstelle einer Temperaturmeßwiderstandsstruktur kann auf dem Substrat auch eine Struktur bestehend aus einem Thermoelementpaar aufgebracht werden. In diesem Fall muß dann der Bereich, in dem der Übergang der beiden Thermoelementwerkstoffe stattfindet vom katalytisch aktiven Werkstoff beschichtet werden. Selbstverständlich kann auch eine dünne, z.B. elektrisch isolierende Zwischenschicht zwischen Temperaturfühler und katalytisch aktivem Werkstoff aufgebracht werden.

Es ist auch als erfindungsgemäß anzusehen, wenn ein aus zwei Thermoelementdrähten bestehendes Thermoelement direkt mit der katalytisch aktiven Beschichtung versehen wird. Oder die Thermoelementdrähte werden mit einem Werkstoff versehen, auf welchen dann die aktive katalytisch Beschichtung aufgebracht wird.

Bei all diesen Ausführungsformen ist es wichtig zu beachten, daß zwischen Temperaturfühler (z.B. Thermoelementpaar oder Widerstandsthermometer) und katalytisch aktiver Beschichtung ein möglichst guter thermischer Kontakt, d.h. ein möglichst kurzer Abstand und eine möglichst gut wärmeleitfähige Verbindung besteht. Am besten ist es, wenn die katalytisch aktive Beschichtung möglichst mit dem Temperaturfühler im Kontakt steht.

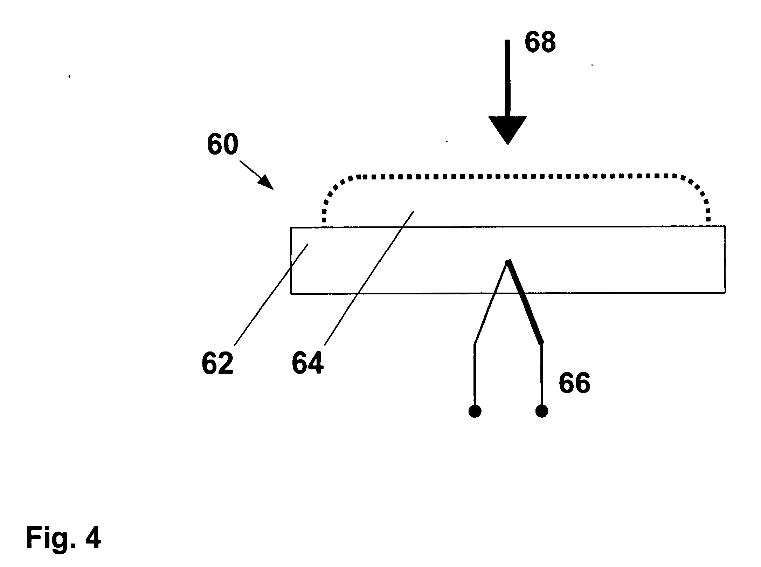

Ein Ausführungsbeispiel findet man in Fig. 4. Die gesamte Meßanordnung 60 besteht aus einem Körper 62, der idealerweise eine geringe thermische Masse besitzt. Gleichzeitig versucht man, seine Fläche, auf die die katalytisch aktive Beschichtung 64 aufgebracht ist, möglichst groß zu machen. Die katalytisch aktive Beschichtung 64 wird vom Gasstrom 68 angeströmt. Der Körper 62 ist mit einem Thermoelement 66 versehen, das in einem möglichst guten thermischen Kontakt mit dem Körper 62 steht.

Möglichkeiten, wie solche o.g. Meßanordnungen direkt im Abgasrohr anzubringen sind, sind nicht primär Gegenstand dieser Erfindung.

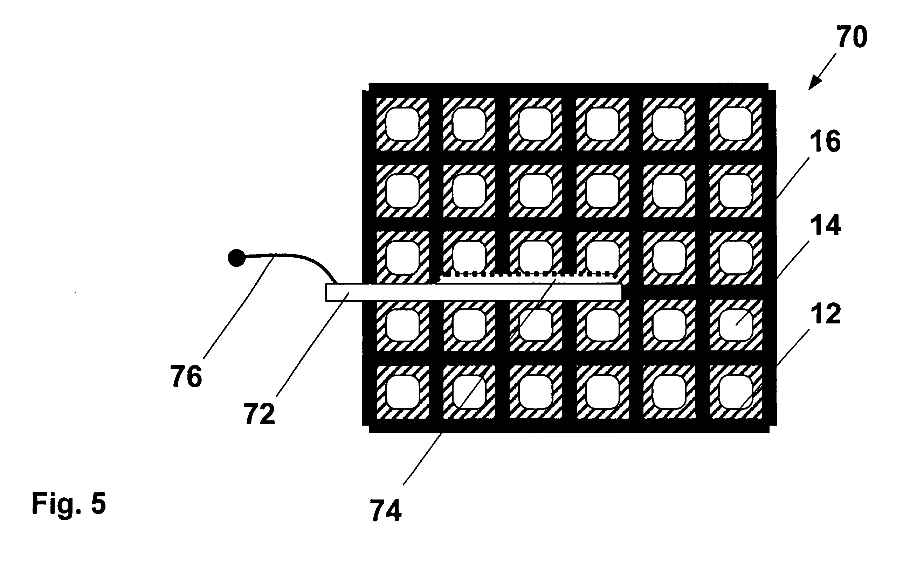

Eine besonders vorteilhafte Ausführung der Erfindung, die die Integration in einen Katalysator 70 beschreibt, ist in Fig. 5 skizziert. In Fig. 5 wurde ein Ausschnitt eines Katalysatormonolithen mit den Stegen 16, die mit der katalytisch aktiven Beschichtung 12 beschichtet sind, und den Kanälen 14 skizziert. Dem Katalysatormonolithen wurde ein Stück eines Steges 16 entnommen. Statt dessen wurde ein beschichteter Temperaturfühler, der aus den in Fig. 3 beschriebenen Komponenten bestand, von denen hier nur das Substrat 72 und die katalytisch aktive Beschichtung 74 gezeichnet sind, anstelle eines Steges 16 in den Katalysator 10 integriert. Weiterhin findet man angedeutet die elektrischen Anschlußleitungen 76.

Der Vorteil dieser Ausführung liegt auf der Hand. Das Gas kann weiterhin durch die Kanäle des Katalysators strömen. Da das Substrat 72 in etwa die gleiche Stärke wie ein Steg 74 besitzt, behindert der erfindungsgemäße Temperaturfühler den Gasfluß nicht. An der katalytisch aktiven Beschichtung 74 des Temperaturfühlers finden die gleichen chemischen Reaktionen wie am beschichteten Katalysator statt. Es liegt auf der Hand, daß der erfindungsgemäße Temperaturfühler demnach nicht die Gastemperatur sondern die durch die Reaktion sich verändernde Temperatur der katalytisch aktiven Beschichtung messen kann.

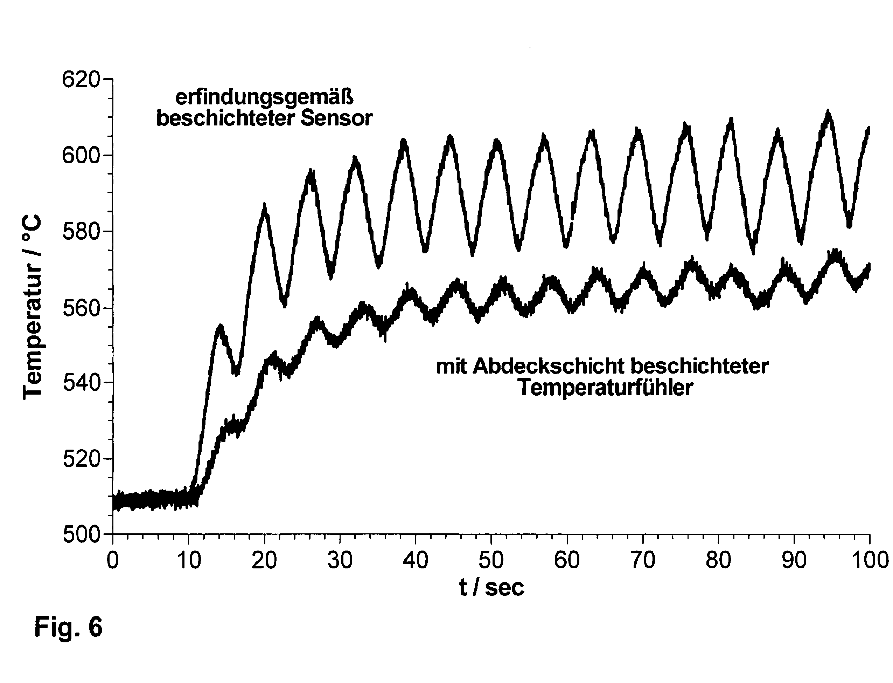

Ein typisches Meßergebnis verdeutlicht dies. In Fig. 6 wurde ein erfindungsgemäßer, mit einer katalytisch aktiven Beschichtung versehenen Temperaturfühler in einen Katalysatormonolithen integriert. Der Sensor war am Gaseintritt des Katalysators angeordnet. Der Katalysator -und damit auch der beschichtete Temperaturfühler- wurde zuerst für längere Zeit mit magerem Abgas (Abgastemperatur ca. 510°C, λ=1,1) beaufschlagt. Bei t=0sec wurde die Meßwertaufzeichnung gestartet. Nach ca. t=10sec wurden Katalysator und beschichteter Temperaturfühler je 3sec lang mit fettem (λ=0,96) und anschließend 3sec lang mit magerem (λ=1,03) Abgas beaufschlagt. Dieser λ-Wechsel wurde danach ständig wiederholt. Bei t=100sec endete die Meßwertaufzeichnung. Der gleiche Versuch wurde mit einem an die gleiche Stelle in den Katalysator integrierten jedoch nun mit einer katalytisch inaktiven Abdeckschicht beschichteten Sensor durchgeführt.

Deutlich ist erkennbar, wie der katalytisch beschichtete Temperaturfühler eine wesentlich größere Dynamik aufweist. Auch der Temperaturhub, den der erfindungsgemäße Temperaturfühler anzeigt, ist deutlich größer als beim katalytisch nicht beschichteten Temperaturfühler. Ein nach Katalysator angeordneter Temperaturfühler sieht die Temperaturerhöhungen, die aufgrund der Exothermie beim λ-Wechsel auf der Schicht entstehen, nicht. Er zeigt lediglich eine leichte Temperaturerhöhung an.

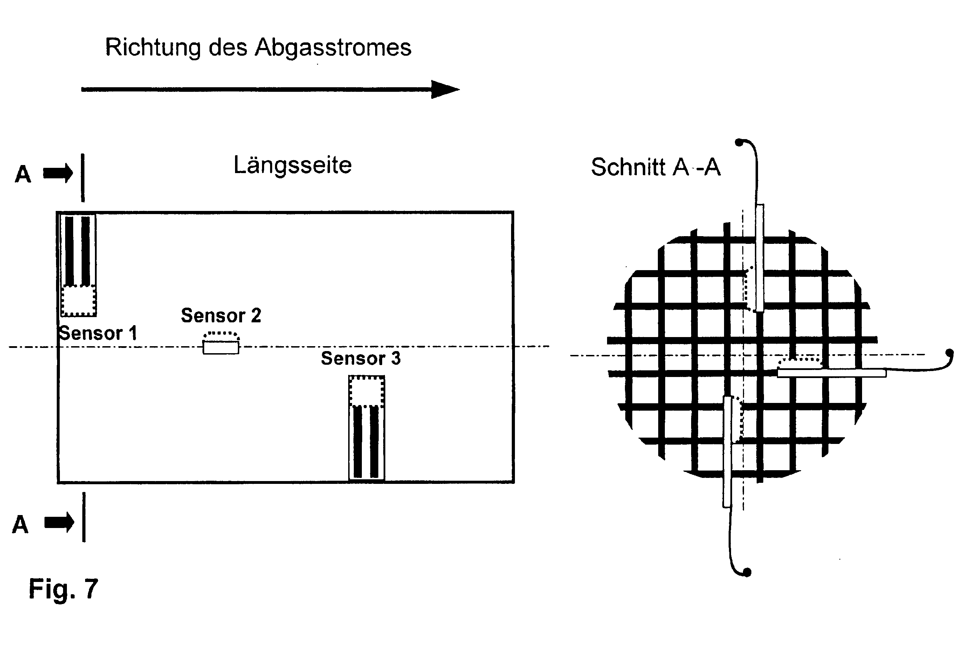

Eine Anordnung, in der mehrere solcher erfindungsgemäßer Temperaturfühler in einen Katalysatormonolithen eingebaut sind, ist ebenfalls Gegenstand der Erfindung. In Fig.7 erkennt man drei Temperaturfühler, die entlang des Katalysators in Abgasstromrichtung angeordnet sind. Als besonders vorteilhafte Ausführung erkennt man auch noch einen Versatz bzgl. der Kanäle.

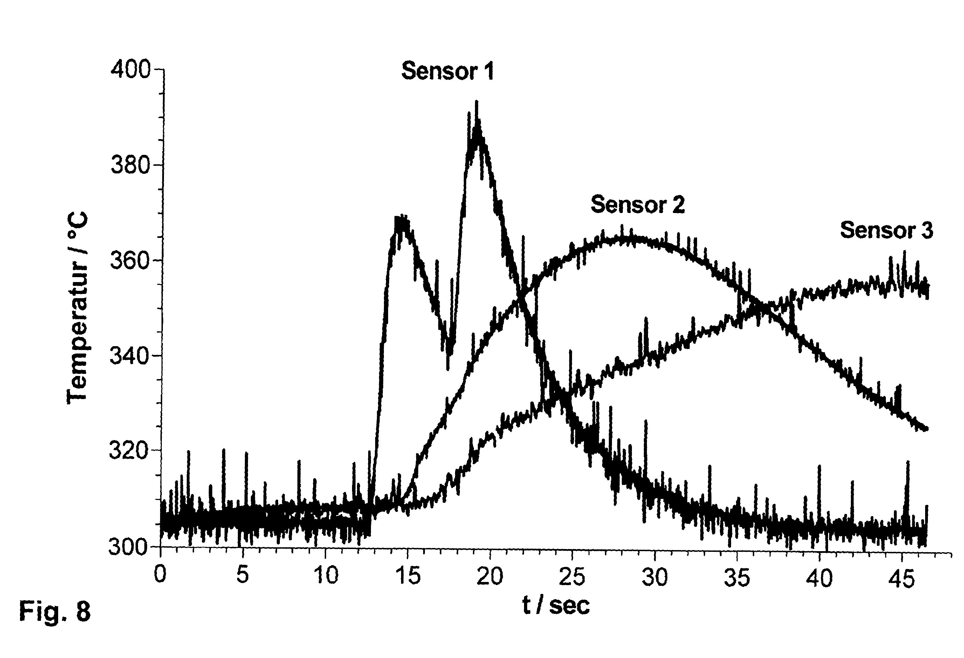

Mit dieser Anordnung wurden die Messungen durchgeführt, deren Ergebnis man in Fig. 8 findet. Ein wie in Fig. 7 aufgebauter NOx-Speicherkatalysator mit drei Sensoren, die wie in Fig. 7 beschreiben angeordnet wurden, wurde in eine Meßapparatur eingebaut, in der er von synthetischem Abgas durchströmt wurde. Das synthetische Abgas wurde auf eine Gastemperatur von 310°C vorgeheizt. Die
Raumgeschwindigkeit betrug 28000 l/h. Der Katalysator wurde 3 min lang mit einem mageren, stickoxidhaltigen synthetischen Abgas (λ≈2) beladen. Danach wurde ca. 5 sec lang auf fettes Abgas (λ≈0,75) umgeschaltet, um den NOx-Speicherkatalysator zu regenerieren. In Fig. 8 findet dieser Sprung etwa bei t=12,5sec statt. Man erkennt sehr deutlich, wie sich am Sensor 1, d.h. am Katalysatoreintritt, eine extrem schnelle erste Temperaturspitze mit einer Temperaturerhöhung von ca. 65°C ausbildet. Beim erneuten Umschalten auf mageres Abgas tritt eine weitere kurze Temperaturspitze auf, die im Vergleich zum stationären Zustand über 80°C beträgt. Eine solche Temperaturspitze tritt im weiteren Verlauf entlang des Katalysators nicht mehr auf. Die Sensoren 2 und 3 sehen einen langsamen Anstieg um der Temperatur ca. 60°C bzw. ca. 50°C. Vergleichsmessungen mit einem herkömmlichen Thermoelement nach Katalysator ergaben lediglich eine Temperaturerhöhung um einige wenige Grade.

Anhand dieses Bildes erkennt man noch einmal sehr deutlich die Vorteile der Erfindung. Es ist möglich, Temperaturerhöhungen zu detektieren, die lokal sehr schnell in der Schicht vonstatten gehen, und die Auswirkungen auf die Funktionalität der Schicht und damit auf das gesamte System haben. Aufgrund der Sensoreigenschaften sind die Sensorsignale in besonderer Weise für eine Prozess-Steuerung geeignet. Insbesondere kann wenigstens teilweise Art und Menge der dem Katalysator zugeführten Reagenzien vom Sensor gesteuert werden. Natürlich ist ebenso der Aufbau eines Regelkreises möglich, mit dessen Hilfe die dem Katalysator zugeführten Reagenzien hinsichtlich Art und Menge auf der Basis des Sensorsignals geregelt werden.

Von der fertigungstechnischen Seite betrachtet, bieten sich mehre Möglichkeiten der Herstellung an: Einerseits kann zuerst das mit dem unbeschichteten Temperaturfühler versehene Substrat in den ebenfalls unbeschichteten Katalysatormonolithen eingebaut werden und anschließend der Temperaturfühler zusammen mit dem Katalysatormonolithen beschichtet werden. Andererseits kann aber auch ein bereits beschichteter Temperaturfühler in einen bereits beschichteten Monolithen integriert werden. Letzeres ist aufwendiger, allerdings lassen sich, wie weiter unten gezeigt, damit noch weitere Meßgrößen erfassen, indem z.B. die beiden Seiten des Substrates unterschiedlich beschichtet werden.

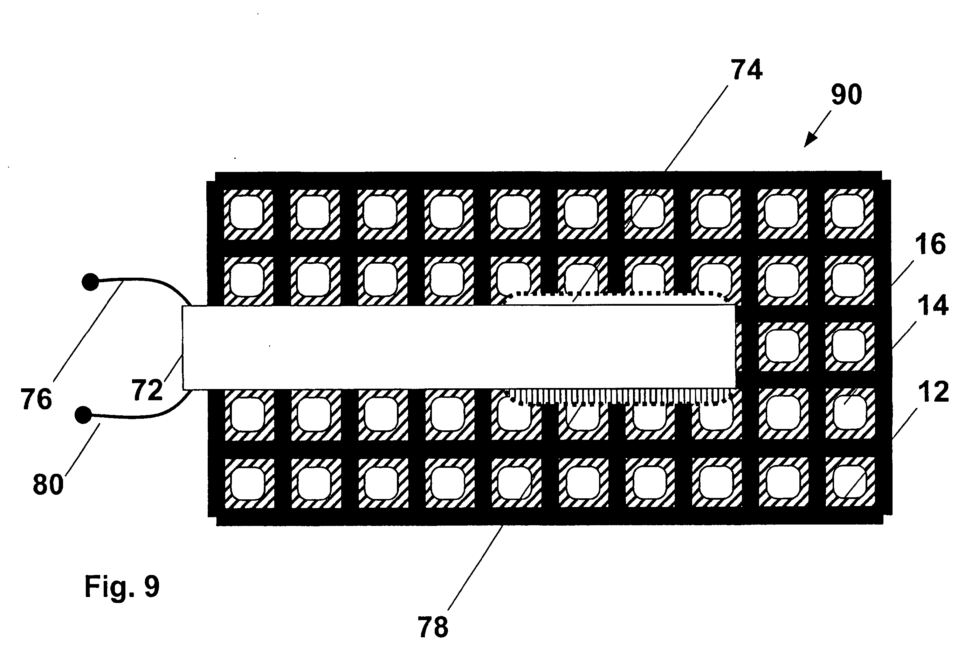

Selbstverständlich muß die Integration des erfindungsgemäßen Temperaturfühlers in den Katalysator nicht unbedingt genau wie in Fig. 5 skizziert geschehen. Es ist z.B. auch denkbar, eine Substratstärke zu wählen, die stärker als ein Steg ist. Es sollte dann darauf geachtet werden, daß zumindest die beschichtete Seite des erfindungsgemäßen Temperaturfühlers genau wie die übrige katalytisch aktive Schicht vom Gas angeströmt wird. Es kann zum Beispiel, wie in Fig. 9 skizziert ist, das Substrat 72 dicker als ein Kanal ausgeführt sein. In diesem Fall, der sich vor allem bei Katalysatoren mit hoher Kanaldichte (z.B. 600 cpsi oder höher) oder bei dicken Substraten anbietet, wird lediglich eine Reihe nebeneinanderliegender Kanäle "verstopft" werden. Eine wie in Fig. 9 skizzierte Ausführung erhöht die mechanische Stabilität. Details der mechanischen Ausführung sind nicht Gegenstand der Erfindung.

In Fig. 9 ist noch eine weitere Ausführungsform dieser Erfindung dargestellt. Der oder die Temperaturfühler sind beidseitig beschichtet. Die zusätzliche Beschichtung 78 (mit den skizzierten Zuleitungen 80) kann wie die Beschichtung 74 ausgeführt sein, was zu einer erhöhten Sicherheit des Meßsignales führt. Es kann sich aber auch um eine katalytisch inaktive oder katalytisch anders aktive Beschichtung handeln, so daß aus der Differenz der beiden Temperatursignale direkt auf die Exothermie und daraus auf die Katalysatorgüte geschlossen werden kann.

Bei all diesen Ausführungsformen sollte darauf geachtet werden, daß die Strömung im Katalysator durch die zusätzlich eingebrachte erfindungsgemäße Vorrichtung nicht wesentlich verändert wird. Die Anströmung des erfindungsgemäßen Temperaturfühlers sollte entsprechend der katalytisch aktiven Beschichtung des Katalysatormonolithen sein.

Eine weitere Ausführungsform ergibt sich, wenn man die erfindungsgemäße Ausführungsform mit Sensoren, wie sie z.B. in der DE 198 05 928 oder in der DE 100 64 499 vorgeschlagen werden, kombiniert. Eine Auswertung kann gemäß der DE 100 64 499 geschehen.

Ein Beispiel sei hier angeführt. Auf die Unterseite des erfindungsgemäßen Temperaturfühlers, der z.B. wie in Fig. 9 skizziert eingebaut wird, wird eine wie in der DE 100 64 499 (dort in Fig. 2) vorgeschlagene IDK-Struktur aufgebracht. Im Gegensatz zur DE 100 64 499 wird der Temperaturfühler mit der katalytisch aktiven Beschichtung versehen. Mit diesem Verfahren ist es dann möglich, neben der Güte des Katalysators auch dessen Zustand zu bestimmen. Zudem bietet sich durch die erfindungsgemäße katalytisch aktive Beschichtung des Temperaturfühlers die Möglichkeit, die Schichttemperatur genauer zu bestimmen, und somit die temperaturabhängigen elektrischen Eigenschaften der katalytisch aktiven Beschichtung genauer zu bestimmen, da eine genauere Temperaturkorrektur durchgeführt werden kann.

Eine weitere Ausgestaltung der Erfindung ist es, wenn man auf die gleiche Seite des Substrates zusammen mit dem beschichteten Temperaturfühler die IDK-Struktur oder eine andere Elektrodenanordnung aufbringt. Somit ist auf der Rückseite Platz für ein weiteres Sensorelement, z.B. einen Gassensor oder einen Zustandssensor. Als Elektrodenanordnung, die bereits einen Temperaturfühler enthält, bietet sich z.B. eine sogenannte IDKT-Anordnung wie in der DE 100 41 921 beschrieben an. Es schlängelt sich dabei zwischen beiden IDK-Elektroden, die hier parallel geschaltet werden, eine dünne Leiterbahn, die als Gegenelektrode und gleichzeitig als Temperaturfühler dient, durch. Auf diese IDKT-Anordnung folgt dann die katalytisch aktive Beschichtung. Auf die andere Seite des Substrates kann z.B. ein Temperaturfühler mit einer katalytisch inaktiven Beschichtung aufgebracht werden. Oder es kann dort ein Gassensor aufgebracht werden.

Eine weitere einfache Möglichkeit der Anordnung ist es, Temperaturfühler und Elektrodenanordnung (z.B. IDK) nebeneinander anzuordnen. Auch dadurch bleibt die Rückseite frei.

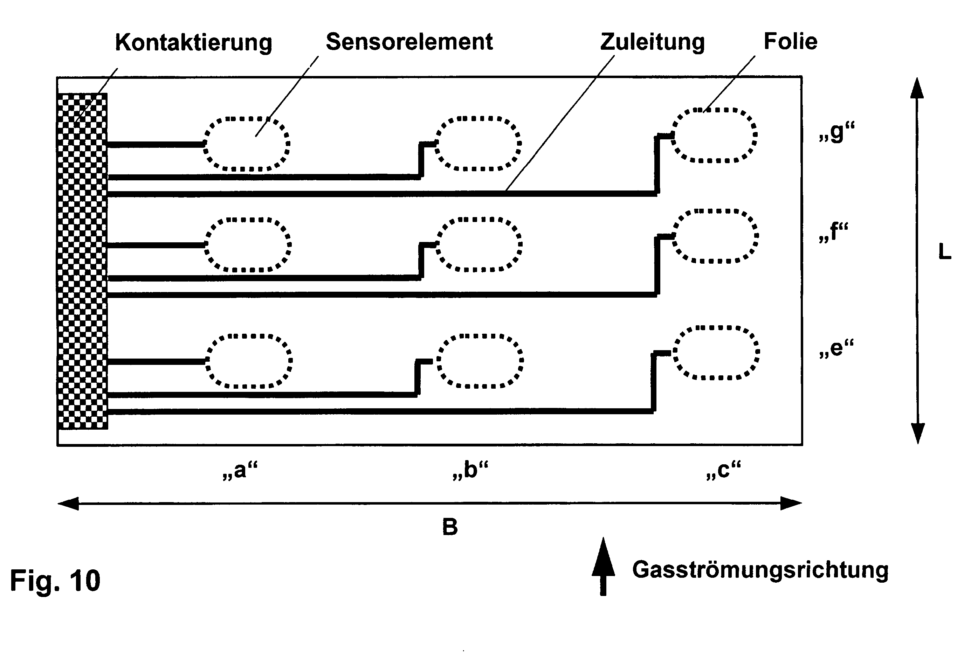

Eine weitere einfache Anordnung besteht darin, den erfindungsgemäßen Temperaturfühler (ggf. mit einem Zustandssensor, wie oben erwähnt) in den Katalysator zu integrieren, indem man als Katalysatorträger eine Folienstruktur (insbesondere eine Metallfolienstruktur) verwendet, die später zu einem Katalysatormonolithen gewickelt wird. Fig. 10 skizziert dies. Auf eine Folie der Länge L und der Breite B, wobei L der späteren Länge des Katalysatormonolithen entspricht, wurden Temperaturfühler und Meßelektroden (Meßelektroden z.B. in IDK-Anordnung) aufgebracht. Temperaturfühler und Meßelektroden zusammen wurden in Fig. 10 als Sensorelement bezeichnet. Das Sensorelement kann nur aus einem Temperaturfühler bestehen oder aus einer Kombination aus Temperaturfühler und Elektrodenanordnung. Diese können entweder nebeneinander angeordnet sein, oder es kann sich um eine integrierte Struktur, z.B. in Form einer wie oben beschriebenen IDKT-Struktur handeln. In Fig. 10 sind die Sensorelemente mit Zuleitungen an eine Kontaktierungsanordnung zum Signalübertrag an die Motorelektronik verbunden. Die Zuleitungen zwischen Sensor und Kontaktierungsanordnung sind in Fig. 10 nur schematisch angedeutet.

Ein solcher wie in Fig. 10 beschriebener Aufbau hat zum Vorteil, daß man auf die spezielle Folie eine gewünschte Anzahl von Sensoren und Temperaturfühlern aufbringen kann. Die Temperaturfühler können z.B. herkömmliche dünne Thermoelemente oder aber in Schichttechnik aufgebrachte temperaturabhängige Widerstände sein. Auf der Folie wird die oben erwähnte geeignete Kontaktierungsmöglichkeit vorgehalten.

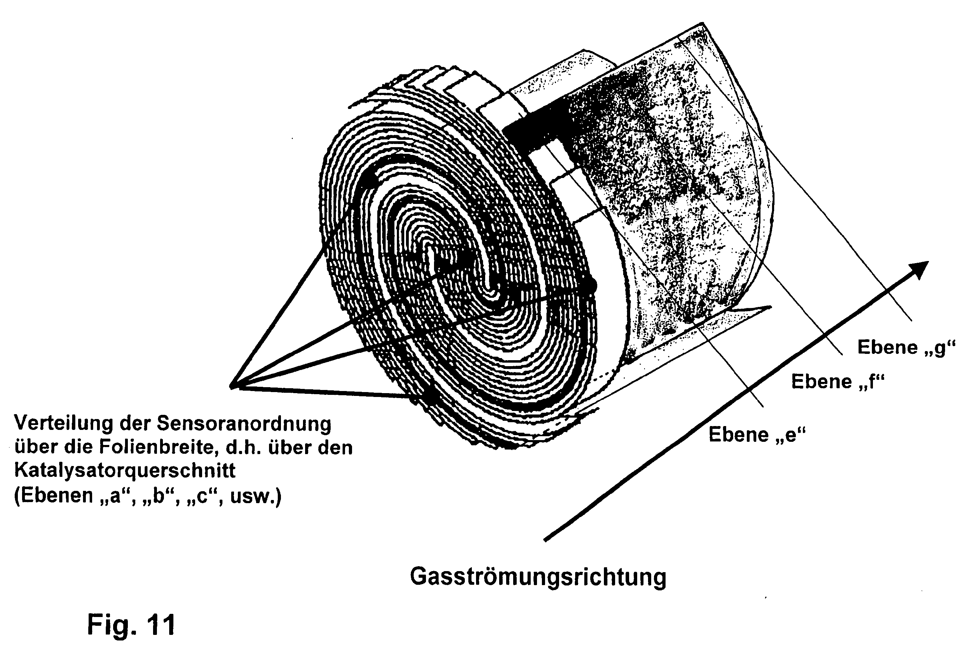

Der nächste Prozeßschritt ist dann das Wickeln der Folie zu einem Katalysatormonolithen. Dabei werden die Folien gewickelt und in einen Mantel geschoben, der dann die Außenwandung des Katalysatormonolithen darstellt. Fig. 11 verdeutlicht dies. Es ist dann darauf zu achten, daß die Kontaktfläche (Kontaktierungsmöglichkeit) für eine spätere Weiterverarbeitung zugänglich bleibt. Anschließend kann der Monolith beschichtet werden, wobei natürlich gleichzeitig auch die Sensoren ihre Beschichtung erhalten, die dann identisch mit der Beschichtung des Katalysators ist.

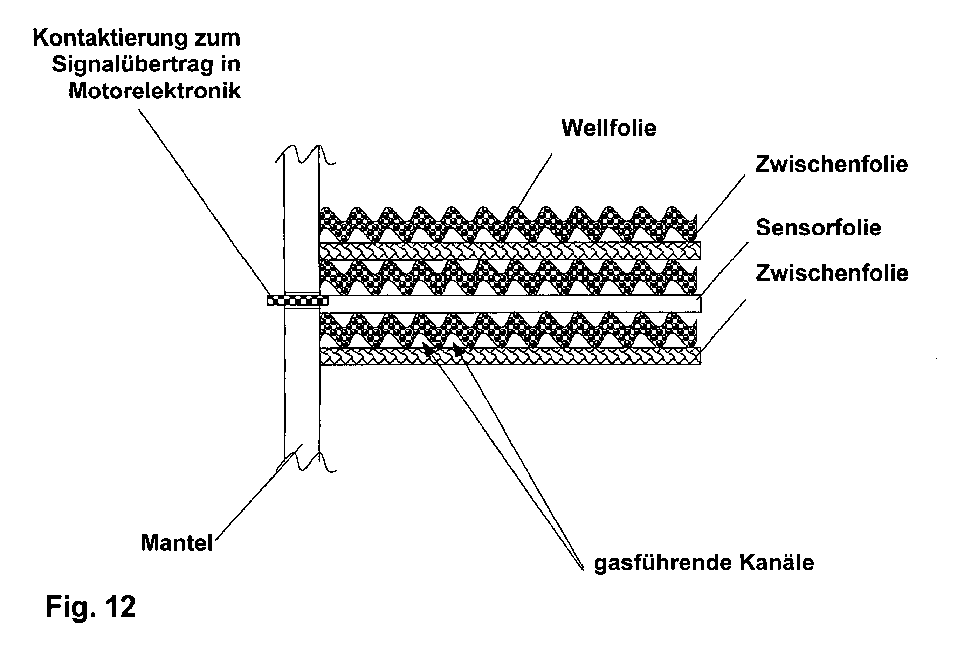

Zum besseren Verständnis eines "Wickelkatalysators" soll Fig. 12 dienen. In dem Ausschnitt aus dem Querschnitt eines Katalysatormonolithen erkennt man wechselweise gewellte Folien (auch "Wellfolie" genannt) und nicht gewellte Folien (auch "Zwischenfolie" genannt), die so angeordnet sind, daß sich gasführende Kanäle bilden. Eine der Zwischenfolien kann als Sensorfolie, wie in Fig. 10 skizziert, ausgebildet werden. Weiterhin ist in Fig. 12 die Außenwandung des Katalysatormonolithen skizziert, die so ausgeführt sein kann, daß eine Kontaktierung der elektrischen Leitungen erfolgen kann, damit die Signale zur Motorelektronik gelangen können.

Die Sensoren können durch geeignete Anordnung den Querschnitt (z.B. durch Anordnung mehrerer Sensoren in Ebene "e" z.B. je eines Sensors in den Bereichen "a", "b" oder "c") des Katalysatorträgers an entsprechender Stelle überwachen bzw. detektieren. Sie können aber auch Aufschluß über das Verhalten des Katalysators in Strömungsrichtung geben, z.B. durch Anbringen je eines Sensors in den Bereichen "e", "f" oder "g". Eine Kombination von mehreren Sensoren über den Querschnitt als auch über die Katalysatorlänge ermöglicht eine vollkommene Katalysator-Volumen-Detektion, so daß auch Einflüsse wie "Ungleichverteilung" der Strömung hinsichtlich Gaszusammensetzung, Temperatur, Strömungsgeschwindigkeit, Pulsation, etc. gemessenen werden könnten. Daraus können motorische Maßnahmen abgeleitet werden, so daß wiederum ein besseres Konversionsverhalten erreicht werden kann.

Es sei zum Abschluß noch darauf hingewiesen, daß die erfindungsgemäße Vorrichtung eines in den Katalysator integrierten, katalytisch aktiv beschichteten Temperaturfühlers für praktisch alle im Abgasstrang vorkommenden Katalysatoren möglich ist, d.h. z.B. sowohl für einen NOx-Speicherkatalysator als auch für einen "Drei-Wege-Katalysator" oder einen NH3-Bildungskatalysator oder einen NH3-SCR-Katalysator oder einen HC-Adsorber oder auch für einen Partikelfilter. Dies gilt auch für die Möglichkeit zusätzliche Zustandssensoren, wie in den Fig. 9 bis 12 beschrieben, mit dem erfindungsgemäßen Temperaturfühler zu kombinieren.

## Patentansprüche

1. Sensor zur Überwachung und/oder Steuerung eines Katalysators (10; 70; 90), insbesondere eines Kraftfahrzeugkatalysators, mit einem mit einer katalytischen Beschichtung (50; 74) versehenen, als Temperaturfühler ausgebildeten ersten Sensorelement (48), wobei der Sensor in den Katalysator (10; 70; 90) integriert ist, welchen der Sensor überwacht und/oder steuert,
**dadurch gekennzeichnet,**
**dass** der Sensor wenigstens ein weiteres, zweites Sensorelement aufweist, wobei das erste und das zweite Sensorelement auf einem gemeinsamen Substrat (42; 72) angeordnet sind, auf dem der Sensor aufgebaut ist.

2. Sensor nach Anspruch 1,
**dadurch gekennzeichnet,**
**dass** das zweite Sensorelement eine Beschichtung (78) aufweist, wobei die katalytische Bezahichtung (50; 74) des Temperaturfühlers und die Beschichtung (78) des zweiten Sensorelementes wenigstens Teile desjenigen katalytischen Materials (12) aufweist, das auf dem von dem Sensor überwachten und/oder gesteuerten Katalysator (10; 70; 90) aufgebracht ist oder wenigstens Teile desjenigen katalytischen Materials aufweist, aus welchem der von dem Sensor überwachte und/oder gesteuerte Katalysator (10; 70; 90) besteht.

3. Sensor nach Anspruch 1 oder 2,
**dadurch gekennzeichnet,**
**dass** das zweite Sensorelement als Temperaturfühler ausgebildet ist.

4. Sensor nach Anspruch 2,
**dadurch gekennzeichnet,**
**dass** das zweite Sensorelement eine zur Erfassung einer elektrischen Eigenschaft seiner Beschichtung (78) geeignete Elektrodenstruktur aufweist.

5. Sensor nach einem der vorhergehenden Ansprüche,
**dadurch gekennzeichnet,**
**dass** auf einer Oberseite und auf einer Unterseite des Substrats (42; 72) jeweils wenigstens ein Sensorelement angeordnet ist.

6. Sensor nach einem der vorhergehenden Ansprüche,
**dadurch gekennzeichnet,**
**dass** der Sensor in der Abgasanlage eines Kraftfahrzeuges angeordnet ist.

7. Verfahren zur Steuerung oder Regelung eines katalytischen Abgasreinigungsprozesses mit Hilfe eines Temperatursignals eines dem. Abgas ausgesetzten Sensors mit einem katalytisch beschichteten Temperaturfühler, insbesondere eines Sensors nach einem der Ansprüche 1 bis 6,
**dadurch gekennzeichnet,**
**dass** zur Steuerung oder Regelung des katalytischen Abgasreinigungsprozesaes zusätzlich ein zweites Signal des Sensors verwendet wird, das eine elektrische Eigenschaft der katalytischen Beschichtung (50; 74; 78) repräsentiert.

8. Verfahren nach Anspruch 7,
**dadurch gekennzeichnet,**
**dass** es zur Reinigung des Abgases eines Kraftfahrzeuges eingesetzt wird.

## Claims

1. Sensor for monitoring and/or controlling a catalytic converter (10; 70; 90), in particular a motor vehicle catalytic converter, having a first sensor element (48), which is provided with a catalytic coating (50; 74) and is designed as a temperature probe, the sensor being integrated in the catalytic converter (10; 70; 90) which the sensor monitors and/or controls, **characterized in that** the sensor has at least one further, second sensor element, the first and second sensor elements being arranged on a common substrate (42; 72), on which the sensor is constructed.

2. Sensor according to Claim 1, **characterized in that** the second sensor element has a coating (78), the catalytic coating (50; 74) of the temperature probe and the coating (78) of the second sensor element having at least parts of the catalytic material (12) which has been applied to the catalytic converter (10; 70; 90) which is controlled and/or monitored by the sensor, or having at least parts of the catalytic material of which the catalytic converter (10; 70; 90) controlled and/or monitored by the sensor consists.

3. Sensor according to Claim 1, or 2, **characterized in that** the second sensor element is designed as a temperature probe.

4. Sensor according to Claim 2, **characterized in that** the second sensor element has an electrode structure which is suitable for recording an electrical property of its coating (78).

5. Sensor according to one of the preceding claims, **characterized in that** in each case at least one sensor element is arranged on a top side and on an underside of the substrate (42; 72).

6. Sensor according to one of the preceding claims, **characterized in that** the sensor is arranged in the exhaust system of a motor vehicle.

7. Method for the open-loop or closed-loop control of a catalytic exhaust-gas purification process with the aid of a temperature signal from a sensor which is exposed to the exhaust gas and has a catalytically coated temperature probe, in particular a sensor according to one of Claims 1 to 6, **characterized in that** a second signal from the sensor, which represents an electrical property of the catalytic coating (50; 74; 78), is additionally used for the open-loop or closed-loop control of the catalytic exhaust-gas purification process.

8. Method according to Claim 7, **characterized in that** it is used to purify the exhaust gas from a motor vehicle.

## Revendications

1. Capteur pour le contrôle et/ou la commande d'un catalyseur (10 ; 70 ; 90), en particulier d'un catalyseur de véhicule automobile comprenant un premier élément de détection (48) doté d'un revêtement (50 ; 74) catalytique et conçu comme sonde de température, le capteur étant intégré dans le catalyseur (10 ; 70 ; 90), que le capteur contrôle et/ou commande,
**caractérisé en ce que**,
le capteur présente au moins un autre second élément de détection, le premier et le second éléments de détection étant disposés sur un substrat (42 ; 72) commun, sur lequel le capteur est monté.

2. Capteur selon la revendication 1,
**caractérisé en ce que**
le second élément de détection présente un revêtement (78), le revêtement (50 ; 74) catalytique de la sonde de température et le revêtement (78) du second élément de détection présentant au moins des parties du matériau (12) catalytique qui est appliqué sur le catalyseur (10 ; 70 ; 90) contrôlé et/ou commandé par le capteur ou présente au moins des parties du matériau catalytique dans lequel est constitué le catalyseur (10 ; 70 ; 90) contrôlé et/ou commandé par le capteur.

3. Capteur selon la revendication 1 ou 2,
**caractérisé en ce que**
le second élément de détection est conçu comme une sonde de température.

4. Capteur selon la revendication 2,
**caractérisé en ce que**
le second élément de détection présente une structure d'électrode appropriée pour l'enregistrement d'une propriété électrique de son revêtement (78).

5. Capteur selon l'une quelconque des revendications précédentes,
**caractérisé en ce que**
à chaque fois au moins un élément de détection est disposé sur un côté supérieur et sur un côté inférieur du substrat (42 ; 72).

6. Capteur selon l'une quelconque des revendications précédentes,
**caractérisé en ce que**
le capteur est disposé dans l'installation de gaz d'échappement d'un véhicule automobile.

7. Procédé pour la commande ou le réglage d'un procédé d'épuration des gaz brûlés par catalyse à l'aide d'un signal de température d'un capteur exposé aux gaz brûlés avec une sonde de température revêtue par catalyse, en particulier d'un capteur selon l'une quelconque des revendications 1 à 6,
**caractérisé en ce que**
on utilise pour le contrôle ou le réglage du processus d'épuration des gaz brûlés par catalyse en supplément un deuxième signal du capteur, qui représente une propriété électrique du revêtement (50 ; 74 ; 78) catalytique.

8. Procédé selon la revendication 7,
**caractérisé en ce que**
il est utilisé pour l'épuration des gaz d'échappement d'un véhicule automobile.
